# EUROPEAN PATENT SPECIFICATION

(11) **EP 2 279 913 B1**
(45) Date of publication and mention of the grant of the patent: **26.06.2013**
(21) Application number: 09731089.0
(22) Date of filing: 07.01.2009
(51) Int. Cl.: B60R 11/02, G01C 21/00

(54) **VEHICLE-MOUNTED DEVICE**
FAHRZEUGMONTIERTE VORRICHTUNG
DISPOSITIF MONTÉ SUR UN VÉHICULE

(30) Priority: 10.04.2008 JP 2008102870
(43) Date of publication of application: 02.02.2011
(73) Proprietor: Fujitsu Ten Limited, Hyogo 652-8510 (JP)
(72) Inventor: OZAKI, Yukisuke, Kobe-shi Hyogo 652-8510 (JP)
(74) Representative: Ward, James Norman
(86) International application number: PCT/JP2009/050050
(87) International publication number: WO 2009/125610

(56) References cited:
- JP-A- 6 275 059
- JP-A- 8 053 034
- JP-A- 2002 340 575
- JP-A- 2005 284 886
- JP-A- 2006 218 986
- US-A1- 2006 031 617
- US-A1- 2006 046 778

## Description

### FIELD OF THE INVENTION

The present invention relates to a vehicle-mounted device which is capable of attaching and detaching a portable device.

### BACKGROUND OF THE INVENTION

As conventional navigation apparatuses, there are widely known small-sized portable navigation apparatuses with simplified structure and portability (hereinafter, referred to as Portable Navi), also known as Personal Navigation Device; and vehicle-mounted navigation apparatuses accommodated and fixed in a recess portion (DIN opening) formed in a dashboard of a vehicle. The vehicle-mounted navigation apparatuses are capable of guiding with high accuracy by use of the information supplied from vehicles such as vehicle speed, and some of the vehicle-mounted navigation apparatuses are equipped with audio devices.

In recent years, the navigation apparatuses with portability of the Portable Navi and high-accuracy guide function of the in-vehicle navigation apparatus have been studied.

References 1 to 4 disclose a configuration where a navigation portion can be attached and detached to/from an in-vehicle apparatus mounted in a vehicle. By removing the navigation portion from the in-vehicle apparatus, the navigation portion can be used as a Portable Navi of a single unit.

Also, as disclosed in Reference 5, the navigation apparatus is taken out of the vehicle and can be used while walking. In addition, when mounted in a vehicle, the navigation apparatus is in a car-navigation mode, and when taken out of the vehicle, the navigation apparatus is in a person-navigation mode.

There has been known a vehicle-mounted navigation apparatus composed of a main unit that is fixed in a recess portion (DIN opening) formed in a dashboard of a vehicle, and the Portable Navi that is attachable and detachable to/from the main unit. The Portable Navi includes a main display unit composed of liquid crystal, and the main unit includes a sub-display unit displaying a radio frequency, a track number of a recording medium, and so on. When the Portable Navi is attached to the main unit, a user can see information displayed on the main display unit and the sub-display unit.
[Reference 1] Japanese Unexamined Patent Publication No. 8-318792
[Reference 2] Japanese Unexamined Patent Publication No. 2002-328026
[Reference 3] Japanese Unexamined Patent Publication No. 2005-524570
[Reference 4] Japanese Unexamined Patent Publication No. 2001-239895
[Reference 5] Japanese Unexamined Patent Publication No. 2003-166848
US 2006/0031617 discloses a portable computing device according to the preamble of claim 1 which is able to determine a type of a device in which the portable computing device is docked.

### DISCLOSURE OF THE INVENTION

### Problems to be Solved by the Invention

However, in the above-mentioned vehicle-mounted navigation apparatus including the Portable Navi and the main unit, when the same information (e.g. the radio frequency, the track number, or the like) is displayed on the sub-display unit and the main display unit, most users see the main display unit, and hence the sub-display unit need not display the same information. Further, when the same information is displayed on the sub-display unit and the main display unit, display timing of the same information need to be synchronized mutually.

The present invention has been made in view of the above circumstances, and an object of the present invention is to provide a vehicle-mounted device which can reduce power consumption.

### Means to Solve the Problems

To attain the above object, according to a first aspect of the present invention, there is provided a vehicle-mounted device capable of attaching and detaching a portable device including a first display portion, including: a second display portion; a detection portion that detects that the portable device is attached or the portable device is detached; and a control portion that turns off the second display portion when the detection portion detects that the portable device is attached.

With this construction, when the portable device including the first display portion is attached to the vehicle-mounted device, the second display portion which the vehicle-mounted device includes is turned off. Therefore, the power consumption can be reduced.

### Effects of the Invention

In accordance with the present invention, the power consumption of the vehicle-mounted device can be reduced.

### BRIEF DESCRIPTION OF THE DRAWINGS

FIG. 1 is a diagram showing an exterior shape of a vehicle-mounted system including a vehicle-mounted device in accordance with a present embodiment;
FIG. 2 is a diagram showing a front face portion of the vehicle-mounted device from which a portable device is detached;
FIG. 3 is a diagram showing a state of tilting the front face portion against a main unit to expose an insertion/ejection slot;
FIG. 4 is a diagram showing an example of mounting the vehicle-mounted system in a vehicle;
FIG. 5 is a block diagram showing a schematic configuration of the vehicle-mounted system;
FIG. 6 is a diagram showing a configuration of the front face portion of the vehicle-mounted device;
FIG. 7A shows a front view, a top view, a bottom view, a left-side view, and a right-side view of the portable device;
FIG. 7B shows a back view of the portable device;
FIG. 8 is a flowchart showing processes which a controller of the vehicle-mounted device and a controller of the portable device execute; and
FIG. 9 is a diagram showing a state where information displayed on a display unit of the portable device changes.

### DESCRIPTION OF THE PREFERRED EMBODIMENTS

The following is a detailed description of preferred embodiments of the present invention, with reference to the accompanying drawings.

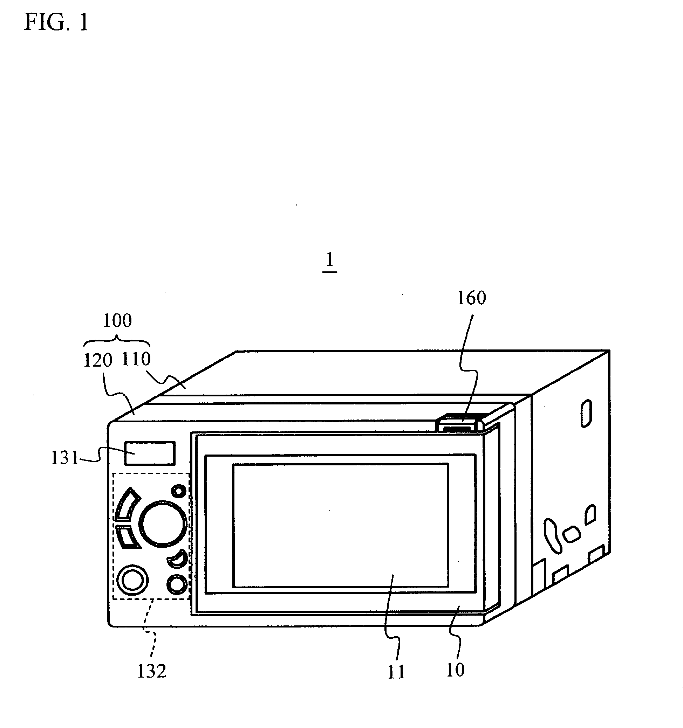

FIG. 1 is a diagram showing an exterior shape of a vehicle-mounted system including a vehicle-mounted device in accordance with a present embodiment.

As shown in FIG. 1, the vehicle-mounted system 1 is composed of: a vehicle-mounted device 100 to be mounted in a vehicle; and a portable device 10 (portable device) with navigation capabilities. The portable device 10 can be used after being attached at a front face portion 120 of the vehicle-mounted device 100, and can be also used alone after being detached from the vehicle-mounted device 100.

The vehicle-mounted device 100 has a playing function of radio broadcasting and a playing function of music data and video data recorded on a recording medium such as a CD (Compact Disk) and a DVD (Digital Versatile Disk). Also, the vehicle-mounted device 100 includes: a main unit 110 having a player of the recording medium and an insertion/ejection slot of the recording medium; and the front face portion 120 having a display unit 131 and an operating unit 132. The portable device 10 has navigation capabilities of searching for a guiding path to a destination and displaying the searched guiding path over a map.

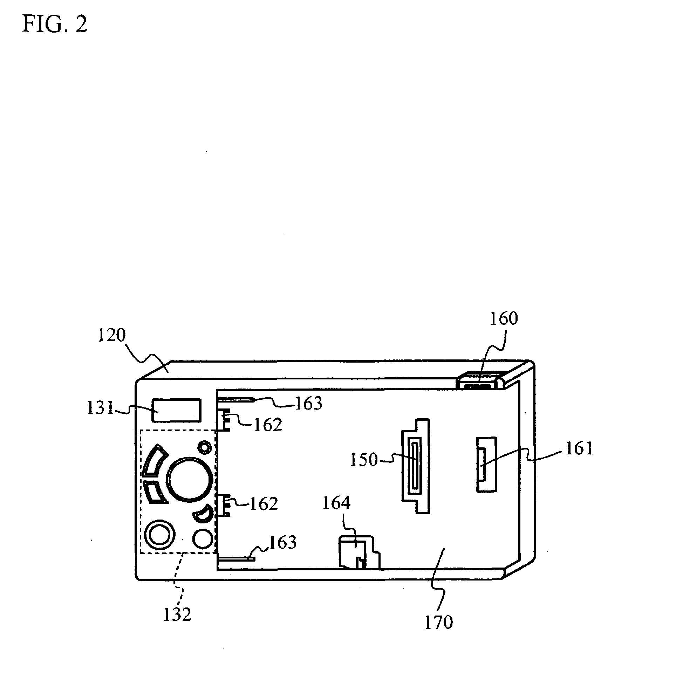

FIG. 2 is a diagram showing the front face portion 120 of the vehicle-mounted device 100 from which the portable device 10 is detached.

There is provided an attached/detached unit 170 in which a recess portion is formed for attaching the portable device 10, at the front face portion 120 of the vehicle-mounted device 100. The attached/detached unit 170 is provided with: a connector 150 for electrically coupling the vehicle-mounted device 100 and the portable device 10; a lock unit 161 and ribs 162 for securing the portable device 10 to the front face portion 120; slopes 163 for guiding an end of the portable device 10 to the ribs 162; and a push-out unit 164 for pushing out the portable device 10 from a back direction to a front direction. When a detach button 160 provided at the front face portion 120 is operated, a lock unit 161 is unlocked and the portable device 10 is detachable from the vehicle-mounted device 100.

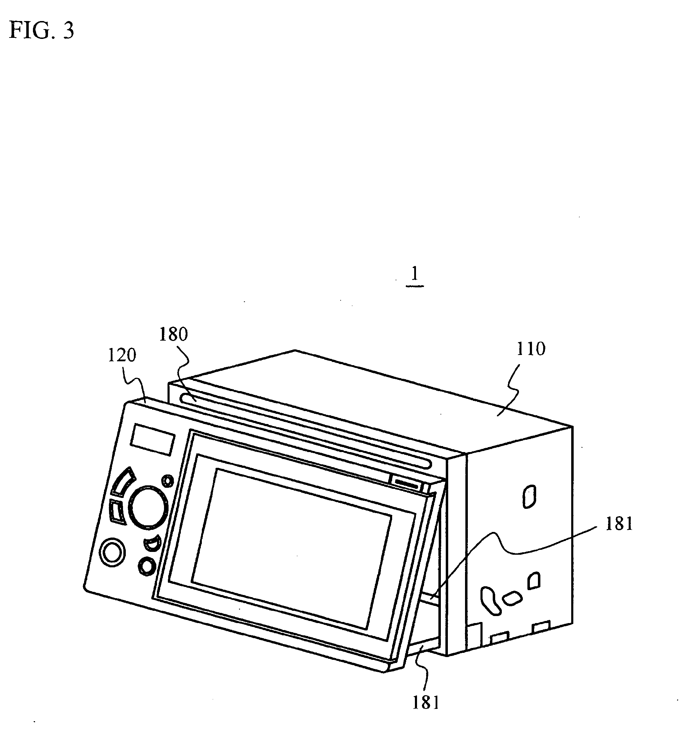

FIG. 3 is a diagram showing a state of tilting the front face portion 120 against the main unit 110 to expose an insertion/ejection slot 180.

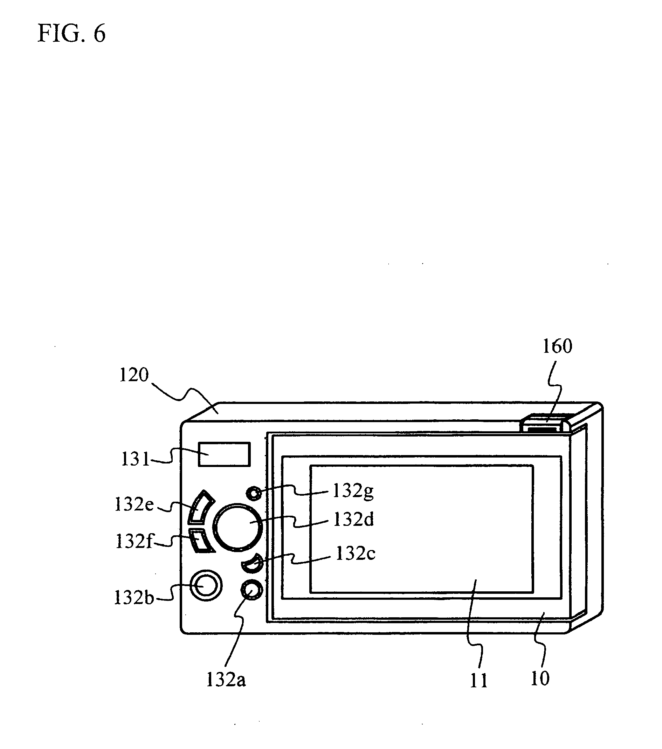

By driving a slider 181 shown in FIG. 3 with a drive mechanism, not shown, the front face portion 120 can be tilted against the main unit 110. By tilting operation, the insertion/ejection slot 180 provided in the main unit 110 is exposed, so that the recording medium can be inserted or ejected. There is provided an operation button (a tilt/eject button 132a shown in FIG. 6), at the front face portion 120 of the vehicle-mounted device 100, and a tilt angle can be set according to the operation of the button.

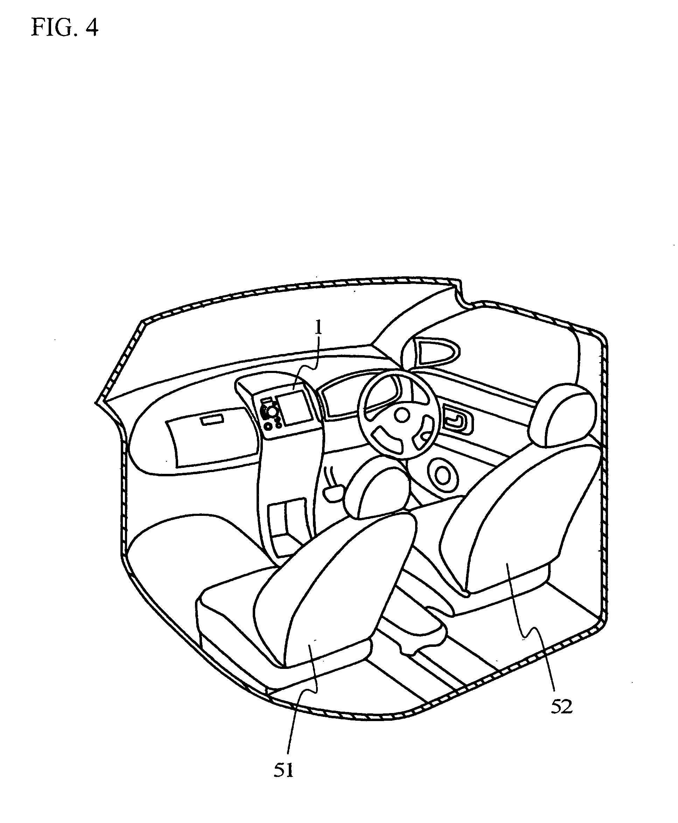

FIG. 4 is a diagram showing an example of mounting the vehicle-mounted system 1 in the vehicle.

The in-vehicle system 1 may be disposed in a dashboard portion substantially in the middle of a front-passenger's seat 51 and a driver's seat 52, as shown in FIG. 4, for example. A GPS antenna, not shown, in a GPS information receiver 133 described later is disposed on a dashboard or inside a front glass of the vehicle.

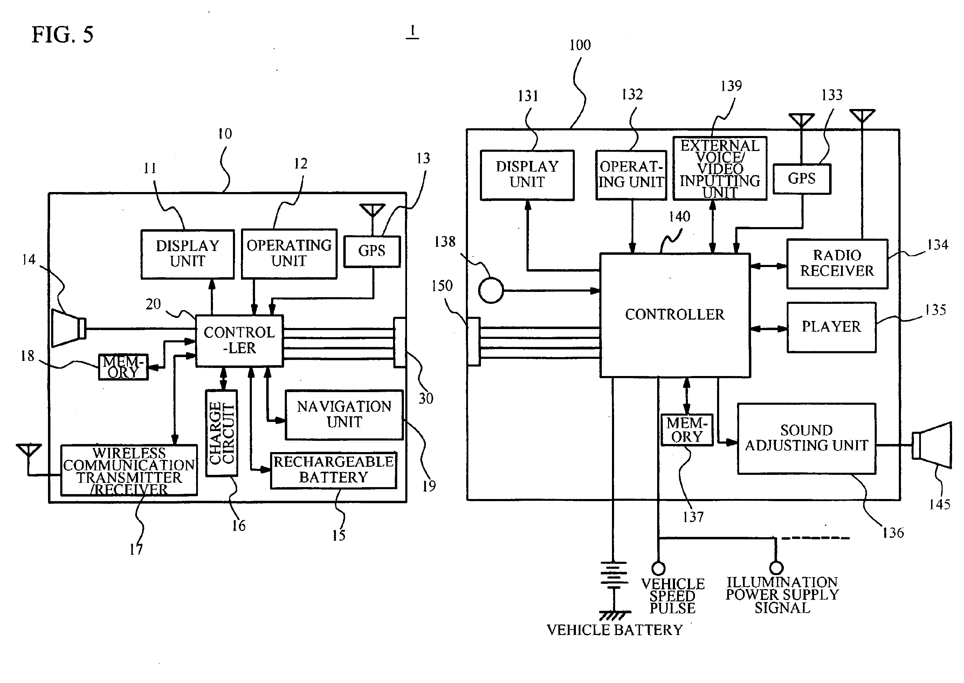

FIG. 5 is a block diagram showing a schematic configuration of the vehicle-mounted system 1.

The vehicle-mounted device 100 and the portable device 10 are electrically connected by connectors. The connector 150 is provided at a side of the vehicle-mounted device 100, and a connector 30 is provided at the portable device 10. By connecting the connectors 150 and 30, various signals are sent and received between the vehicle-mounted device 100 and the portable device 10 to function as the vehicle-mounted system 1. The connectors 150 and 30 are respectively provided with power supply terminals for supplying power to the portable device 10 from a battery of the vehicle. When the portable device 10 is connected to the vehicle-mounted device 100 and the power is supplied to the vehicle-mounted device 100, the power is also supplied to the portable device 10 via the power supply terminals.

The vehicle-mounted device 100 is provided with: the display unit 131 (second display portion); the operating unit 132 (operation portion); the GPS information receiver 133; a radio receiver 134; a player 135; a sound adjusting unit 136; a memory 137; a microphone 138; an external voice/video inputting unit 139; a controller 140 (detection portion, and control portion); and the connector 150. The vehicle-mounted device 100 is activated by supplying the power from the battery of the vehicle, when the engine key is positioned at Acc (Accessory) or IG (Ignition).

The display unit 131 is provided with a liquid crystal panel and a backlight, and displays a frequency of the received broadcasting, a track number of music being reproduced, a music name being reproduced, and the like.

The operating unit 132 inputs an operation instruction for changing the operation mode of the vehicle-mounted device 100, and an operation instruction for operating in various modes that have been changed. The operating unit 132 is provided with: the tilt/eject button 132a for tilting the front face portion 120; a band/tune button 132b for changing a frequency band of the radio to be reproduced or a track number of the recording medium to be reproduced; a TEXT button 132c for changing a title displayed on the display unit 131; a SCREEN button 132d for changing an image displayed on a display unit 11 to any one of a navigation image or the video of the DVD, or for adjusting volume; a SOURCE/PWR button 132e for changing a source to be reproduced or for turning on/off the power of the vehicle-mounted device 100; a CONTROL button 132f for controlling tone quality; a MUTE/SCREENOFF button 132g for cutting audio or for turning on/off display of the display unit 11, as shown in FIG. 6.

Referring back to FIG. 5, the GPS information receiver 133 includes a GPS antenna and a tuner, and receives GPS signals from a satellite. The GPS signal received by the GPS information receiver 133 is output through the controller 140, the connector 150, the connector 30, and a controller 20, to a navigation unit 19 of the portable device 10, and then the position of the vehicle in which the vehicle-mounted device 100 having the portable device 10 therein is determined based on the GPS signal.

The radio receiver 134 has an antenna and a tuner, receives broadcast waves such as AM broadcasting, FM broadcasting, and sound multiplex broadcasting, outputs stereo audio signals, receives and demodulates multiplex data, and outputs the demodulated signal to the controller 140.

The player 135 reproduces the audio data and the video data recorded in the recording medium such as the CD and the DVD, and outputs the reproduced signal to the controller 140.

Herein, the demodulated signal output from the radio receiver 134 may be output to the sound adjusting unit 136, described later, without through the controller 140.

The sound adjusting unit 136 implements signal processing such as volume control or tone control on an audio signal received or demodulated by the radio receiver 134 or the audio signal reproduced by the player 135, and then outputs the processed signal to a speaker 145.

The memory 137 may be composed of a RAM (Random Access Memory) from which data is readable and into which data is writable, and temporarily stores information necessary for control. The microphone 138 is provided for hands-free communication, and takes in user's voices in the vehicle.

The external voice/video inputting unit 139 is provided with a connection terminal with an external device such as a USB memory or a portable audio device, so that an audio signal or data from the external device may be input. The external voice/video inputting unit 139 then sends the signal or data to the controller 140, and outputs an audio signal, data, or the like to the connected external device.

The controller 140 controls the radio receiver 134, the player 135, and the sound adjusting unit 136, according to the operation by means of the operating unit 132. Also, the controller 140 outputs various signals through the connector 150 to the portable device 10, and controls the vehicle-mounted device 100 on the basis of various signals input from the portable device 10. For example, the controller 140 outputs the GPS signal received by the GPS information receiver 133 and an audio signal input by the microphone 138, to the portable device 10 through the connector 150.

Here, the audio signal input by the microphone 138 may be output to the portable device 10 through the connector 150, without through the controller 140.

Further, the controller 140 acquires an operation signal corresponding to a menu image of various modes displayed on the display unit 11 of the portable device 10, from the controller 20 of the portable device 10, and then controls the radio receiver 134 and the player 135.

Also, the power is supplied to the controller 140 from the battery mounted in the vehicle. When the portable device 10 is connected, the controller 140 outputs the power supplied from the battery to the portable device 10. Here, a vehicle speed pulse and an illumination power supply signal are input into the controller 140 from a vehicle. The controller 140 transfers such input vehicle speed pulse to the controller 20 of the portable device 10. Meanwhile, the vehicle speed pulse may be configured not to be input into the vehicle-mounted device 100.

Next, a description will be given of the portable device 10. The portable device 10 is provided with: the display unit 11 (first display portion); an operating unit 12; the GPS information receiver 13; a speaker 14; a rechargeable battery 15; a charge circuit 16; a wireless communication transmitter/receiver 17; a memory 18; the navigation unit 19; the controller 20; and the connector 30.

The display unit 11 is provided with a liquid crystal panel and a backlight, and is capable of displaying map information generated by the navigation unit 19 and guiding path information to a destination, the received broadcasting frequency transferred from the vehicle-mounted device 100, a music track number being played, a music name being played, and the like.

Here, the display units 11 and 131 may employ a flat panel display other than the liquid crystal panel. For example, an organic light emitting display panel, a plasma display panel, a cold-cathode flat panel display, or the like may be employed.

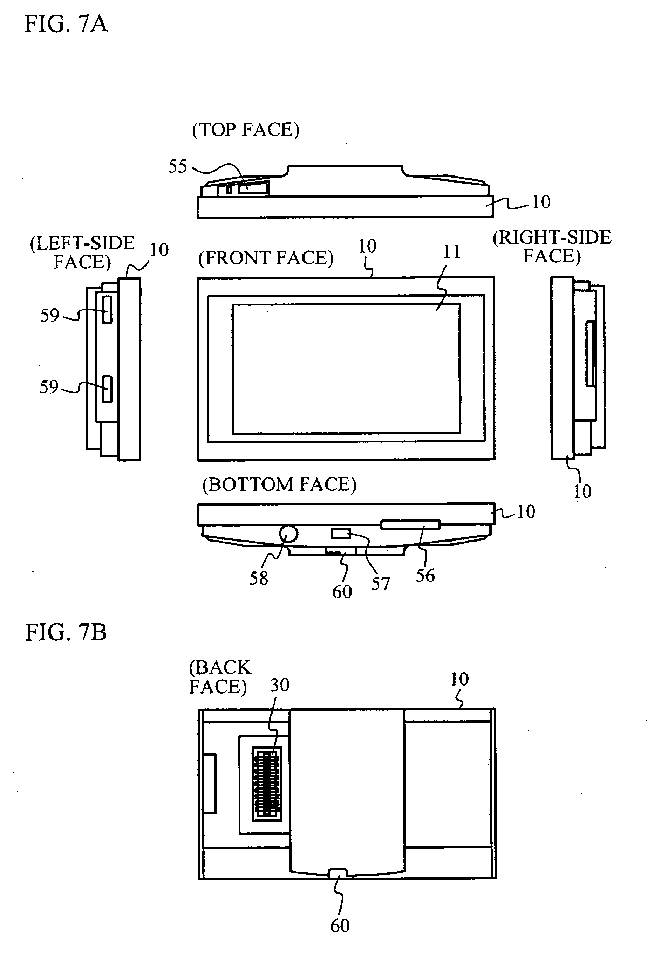

The operating unit 12 includes a touch panel and a power button 55 (see FIG. 7A) for powering on and off the portable device 10. The touch panel may be, for example, disposed over the display screen of the display unit 11. When the touch panel is touched by a finger or a dedicated pen, the touched position is detected to determine whether or not there is an input operation. The power button 55 will be described later.

The GPS information receiver 13 includes an antenna and a tuner, and receives the GPS signal from a satellite. The received GPS signal is output to the navigation unit 19, and the vehicle location is detected based on the GPS signal. Meanwhile, the vehicle-mounted device 100 is also provided with the GPS information receiver 133. However, when the portable device 10 is attached to the vehicle-mounted device 100, the location of the vehicle in which the vehicle-mounted device 100 having the portable device 10 therein is mounted is specified by use of the GPS signal (and the vehicle speed pulse) received by the GPS information receiver 133. When the portable device 10 is used alone, the location thereof is specified by use of the GPS signal received by the GPS information receiver 13.

The speaker 14 is provided for outputting the audio information of the navigation unit 19, and outputs the audio information only when the portable device 10 is detached from the vehicle-mounted device 100, namely, used alone separately as a single unit.

The rechargeable battery 15 supplies power to each unit of the portable device 10 in a state where the portable device 10 is detached from the vehicle-mounted device 100. When the portable device 10 is attached to the vehicle-mounted device 100, the power is supplied through the power supply terminals of the connector 30 from the battery of the vehicle, and hence the rechargeable battery 15 is charged by the charge circuit 16. Also, the charge circuit 16 is supplied with the power from the connection terminal through a USB slot 57 (see FIG. 7A), and the rechargeable battery 15 can be charged.

The wireless communication transmitter/receiver 17 sends and receives the voice on communication over a mobile phone, and acquires the information used for navigation over the mobile phone. For example, Bluetooth, which is a wireless transmission system at 2.4 GHz band, is used for the wireless communication transmitter/receiver 17.

The memory 18 may be a RAM from which data is readable and into which the data is writable, and temporarily stores the information read for each control.

The navigation unit 19 includes a map information storing unit that acquires map information used for navigation from an SD (Secure Digital) card or an embedded memory, and stores therein, determines current location information with the GPS signal from the GPS information receiver 133 or 13, and creates a map image for navigation. The created map image may be displayed on the display unit 11. In addition, when the vehicle-mounted device 100 and the portable device 10 are connected, the vehicle speed pulse is acquired from the vehicle so that the accuracy of the location detection of the vehicle in which the vehicle-mounted device 100 having the portable device 10 therein is mounted can be improved. Also, the map information may be retained in the portable device 10.

The controller 20 controls each unit of the portable device 10. Also, the controller 20 outputs various signals to the vehicle-mounted device 100 through the connector 30, and controls the portable device 10 based on various signals input from the vehicle-mounted device 100. For example, the controller 20 acquires the GPS signal received by the GPS information receiver 133 of the vehicle-mounted device 100 and the vehicle speed pulse from the controller 140 of the vehicle-mounted device 100, and outputs the GPS signal and the vehicle speed pulse to the navigation unit 19. Also, the controller 20 acquires the audio signal input by the microphone 138 of the vehicle-mounted device 100 from the controller 140 of the vehicle-mounted device 100, and controls the navigation unit 19 according to the acquired audio signal. That is to say, the navigation unit 19 can be operated in a hands-free manner. The voice on communication over the mobile phone connected to the wireless communication transmitter/receiver 17 is output to a vehicle-mounted device side through the connector 30, and is caused to output from the speaker 145 of the vehicle-mounted device 100. The operation signal on the menu screen or content screen displayed on the display unit 11 is output to the controller 140 of the vehicle-mounted device 100 through the connector 30. The controller 140 controls the radio receiver 134 or the player 135 according to the operation signal transmitted from the controller 20 of the portable device 10.

FIG. 7A shows a front view, a top view, a bottom view, a left-side view, and a right-side view of the portable device, and FIG. 7B shows a back view of the portable device.

On the top face of the portable device 10, there is provided with the power button 55 for turning on or off the power of the portable device. On the bottom face of the portable device 10, there is provided with: an SD memory card slot 56; a USB slot 57; and an earphone jack 58. On the left-side face of the portable device 10, there is provided with recess portions 59 housing the ribs 162 in FIG. 2. On the back face of the portable device 10, there is provided with the connector 30 for electrically connecting the vehicle-mounted device 100. On the bottom face and the back face of the portable device 10, there is further provided with a latch unit 60 latched with the push-out unit 164 in FIG. 2.

By inserting the SD card or the embedded memory, into which the map information is stored, into the SD memory card slot 56 or the USB slot 57, respectively, the controller 20 reads out the map information from the SD card or the embedded memory and outputs the map information to the navigation unit 19.

The power of the portable device 10 is turned on or off by the control from the vehicle-mounted device 100, when the portable device 10 is attached to the vehicle-mounted device 100. Also, the power is operated on the basis of on or off operation of the power button 55, when the portable device 10 is detached from the vehicle-mounted device 100 and used alone separately.

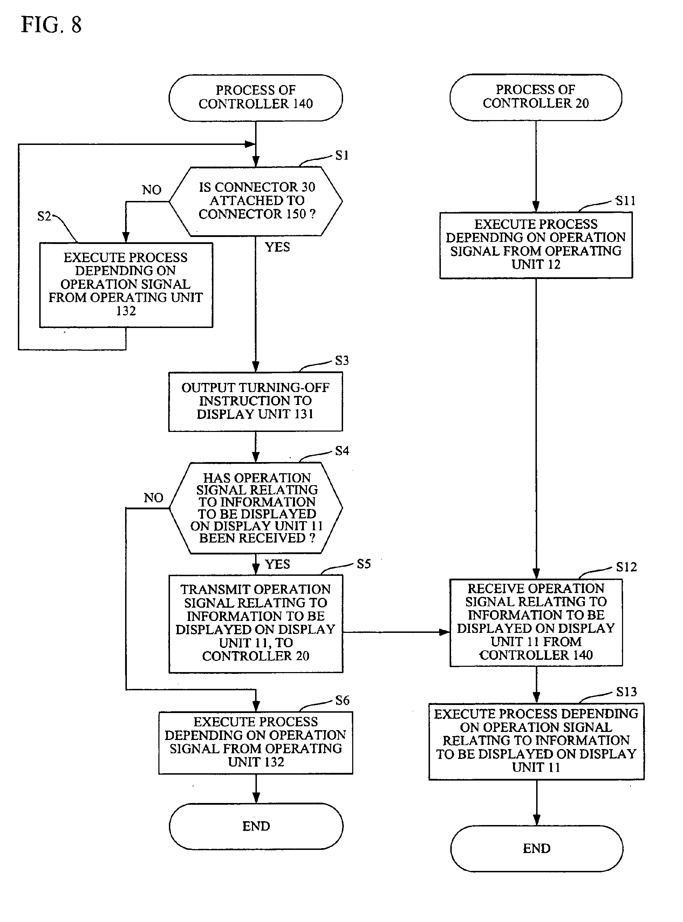

FIG. 8 is a flowchart showing processes which the controller 140 of the vehicle-mounted device 100 and the controller 20 of the portable device 10 execute.

First, the controller 140 of the vehicle-mounted device 100 judges whether the connector 30 of the portable device 10 is attached to the connector 150 (step S1). Specifically, when the controller 140 detects a connection signal from the controller 20 of the portable device 10, the controller 140 judges that the connector 30 of the portable device 10 is attached to the connector 150.

When the answer to the judgment of step S1 is NO (i.e., when the connector 30 of the portable device 10 is not attached to the connector 150), the controller 140 executes a process (e.g. outputting an instruction of volume adjustment to the sound adjusting unit 136, outputting a reproducing instruction to the player 135, outputting information which is contents displayed on the display unit 131, outputting a switching instruction of contents displayed on the display unit 131, or the like) depending on an operation signal from the operating unit 132 (step S2). The procedure returns to step S1. Thus, when the connector 30 of the portable device 10 is not attached to the connector 150, audio information described later is displayed on the display unit 131.

When the answer to the judgment of step S1 is YES (i.e., when the connector 30 of the portable device 10 is attached to the connector 150), the controller 140 outputs a turning-off instruction to the display unit 131 (step S3) to turn off the display panel and the backlight of the display unit 131.

Next, the controller 140 judges whether the controller 140 has received an operation signal relating to information to be displayed on the display unit 11 from the operating unit 132 (step S4). Here, the operation signal relating to information to be displayed on the display unit 11 includes a signal for selectively switching a navigation image and an audio image (i.e., image for switching the frequency band of the radio to be reproduced or the track number of the recording medium to be reproduced) displayed on the display unit 11, a signal for instructing the change of the audio information, a signal for turning off the display unit 11, and the like. In the audio information described above, settings of volume, the track number, the radio frequency, an equalizer, a non-fader (i.e., a volume level of a subwoofer), a low-pass filter, and source volume control are included.

Also, selectively switching the navigation image and the audio image displayed on the display unit 11 is executed by the controller 20 according to depression of the SCREEN button 132d.

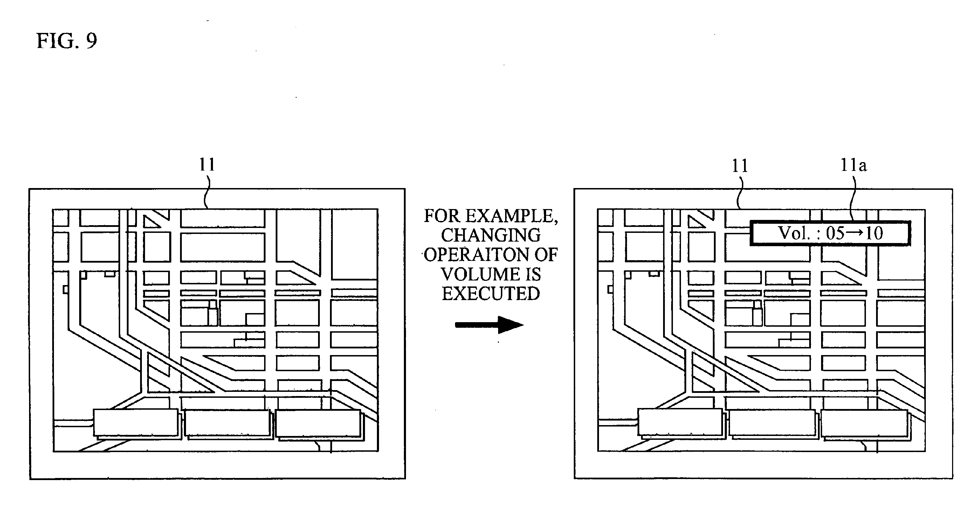

The reason why the signal for instructing the change of the audio information is included in the operation signal relating to information to be displayed on the display unit 11 is that, when any of the band/tune button 132b, the SCREEN button 132d, the SOURCE/PWR button 132e, and the MUTE/SCREENOFF button 132g is operated in a state where the connector 30 of the portable device 10 is attached to the connector 150, information 11a depending on the changing operation is overlapped with and displayed on a part of the navigation image displayed on the display unit 11, as shown in FIG. 9. The information 11a is displayed on the display unit 11 during a given time period (e.g. 10 seconds), and automatically disappears.

When the answer to the judgment of step S4 is YES (i.e., when the controller 140 has received the operation signal relating to information to be displayed on the display unit 11 from the operating unit 132), the controller 140 transmits the operation signal relating to information to be displayed on the display unit 11, to the controller 20 (step S5). ON the other hand, when the answer to the judgment of step S4 is NO (i.e., when the controller 140 has received the operation signal unrelated to information to be displayed on the display unit 11 from the operating unit 132), the controller 140 executes a process (e.g. outputting the reproducing instruction to the player 135, outputting a tilt instruction of the front face portion 120 to a driving mechanism, not shown, or the like) depending on the operation signal from the operating unit 132 (step S6). The present process is terminated.

Meanwhile, the controller 20 of the portable device 10 executes a process (e.g. outputting information which is contents displayed on the display unit 11, outputting a switching instruction of contents displayed on the display unit 11, or the like) depending on an operation signal from the operating unit 12 regardless of whether the connector 30 of the portable device 10 is attached to the connector 150 (step S11).

Next, the controller 20 receives the operation signal relating to information to be displayed on the display unit 11 from the controller 140 (step S12), and executes a process depending on the operation signal relating to information to be displayed on the display unit 11 (step S13). The present process is terminated.

In steps S12 and S13, when the signal for selectively switching the navigation image and the audio image displayed on the display unit 11 is received, for example, the controller 20 switches the image displayed on the display unit 11. In steps S12 and S13, when the signal for instructing the change of the audio image displayed on the display unit 11 is received, for example, the controller 20 causes the display unit 11 to display the navigation image with which the information 11a depending on the changing operation is overlapped.

As described above, according to the present embodiment, when the controller 140 detects that the portable device 10 is attached, the controller 140 turns off the display unit 131 (YES in step S1, and step S2), and hence the power consumption of the vehicle-mounted device 100 can be reduced. Also, the same information is not displayed on the sub-display unit and the main display unit, and it is unnecessary to execute a process that mutually synchronizes the display timing of information displayed on both display units.

Also, the controller 140 judges whether the operation instruction input by the operating unit 132 is an instruction relating to information to be displayed on the display unit 11 on behalf of the display unit 131, and transmits the instruction relating to information to be displayed on the display unit 11, to the portable device 10 (YES in step S4 -> step S5). Then, the portable device 10 causes the display unit 11 to display the information depending on the instruction (step S12 -> step S13). Therefore, the information is displayed on the display unit 11 on behalf of the display unit 131, and hence a display place of the information can be changed according to a situation in which the user sees the information.

Further, the information to be displayed on the display unit 11 on behalf of the display unit 131 is the audio information relating to an audio function which the vehicle-mounted device 100 has. The display unit 11 overlaps the audio information with current displayed information (e.g. the navigation image in FIG. 9) and displays the resultant image. Therefore, the user can confirm the audio information corresponding to the operated audio function by the display unit 11.

Also, when the controller 140 detects that the portable device 10 is detached, the display unit 131 displays the information (e.g. audio information) to be displayed on the display unit 11. Therefore, a display place of the information can be changed according to a situation in which the user sees the information.

A recording medium on which the software program for realizing the functions of the vehicle-mounted device 100 is recorded may be supplied to the vehicle-mounted device 100, and the controller 140 may read and execute the program recorded on the recording medium. In this manner, the same effects as those of the above-described embodiment can be achieved. The recording medium for providing the program may be a CD-ROM, a DVD, or a SD card, for example.

Alternatively, the controller 140 of the vehicle-mounted device 100 may execute a software program for realizing the functions of the vehicle-mounted device 100, so as to achieve the same effects as those of the above-described embodiment.

It should be noted that the present invention is not limited to above-described embodiment, and various modifications may be made to it without departing from the scope of the invention.

## Claims

1. A vehicle-mounted device (100) capable of attaching and detaching a portable device (10) including a first display portion (11), the vehicle-mounted device (100) comprising:
a second display portion (131); and
a detection portion (140) that detects that the portable device (10) is attached or the portable device (10) is detached; and **characterized by** further comprising
a control portion (140) that turns off the second display portion (131) when the detection portion detects that the portable device (10) is attached.

2. The vehicle-mounted device (100) as claimed in claim 1, **characterized by** further comprising:
an operation portion (132) that inputs an operation instruction,
wherein the control portion (140) judges whether the operation instruction input by the operation portion (132) is an instruction relating to information to be displayed on the first display portion (11) on behalf of the second display portion (131), and transmits the instruction relating to the information to be displayed on the first display portion (11), to the portable device (10), and
wherein the portable device (10) causes the first display portion (11) to display the information depending on the instruction.

3. The vehicle-mounted device (100) as claimed in claim 2, wherein the information to be displayed on the first display portion (11) on behalf of the second display portion (131) is audio information relating to an audio function which the vehicle-mounted device (100) has, and the first display portion (11) overlaps the audio information with current displayed information and displays the resultant image.

4. The vehicle-mounted device (100) as claimed in claim 2, wherein when the detection portion (140) detects that the portable device (10) is detached, the second display portion (131) displays the information to be displayed on the first display portion (11).

## Patentansprüche

1. Fahrzeugmontierte Vorrichtung (100), fähig zum Befestigen und Ablösen einer tragbaren Vorrichtung (10) mit einem ersten Anzeigeabschnitt (11), die fahrzeugmontierte Vorrichtung (100) umfassend
einen zweiten Anzeigeabschnitt (131); und
einen Erfassungsabschnitt (140), welcher erfasst, dass die tragbare Vorrichtung (10) befestigt ist oder dass die tragbare Vorrichtung (10) abgelöst ist; und **dadurch gekennzeichnet, dass** sie zudem umfasst
einen Steuerungsabschnitt (140), der den zweiten Anzeigeabschnitt (131) abschaltet, wenn der Erfassungsabschnitt erfasst, dass die tragbare Vorrichtung (10) befestigt ist.

2. Fahrzeugmontierte Vorrichtung (100) gemäß Anspruch 1, **dadurch gekennzeichnet, dass** sie zudem umfasst
einen Ausführungsabschnitt (132), der einen Ausführungsbefehl eingibt,
wobei der Steuerungsabschnitt (140) abschätzt, ob der vom Ausführungsabschnitt (132) eingegebene Ausführungsbefehl ein Befehl ist, der Information betrifft, die im Auftrag des zweiten Anzeigeabschnitts (131) auf dem ersten Anzeigeabschnitt (11) angezeigt werden soll, und welche den die auf dem ersten Anzeigeabschnitt (11) anzuzeigende Information betreffenden Befehl zur tragbaren Vorrichtung (10) überträgt, und
wobei die tragbare Vorrichtung (10) die erste Anzeigevorrichtung (11) dazu bringt, abhängig vom Befehl die Information anzuzeigen.

3. Fahrzeugmontierte Vorrichtung (100) gemäß Anspruch 2, wobei die im Auftrag des zweiten Anzeigeabschnitts (131) auf dem ersten Anzeigeabschnitt (11) anzuzeigende Information Audioinformation ist, betreffend eine Audiofunktion, über welche die fahrzeugmontierte Vorrichtung (100) verfügt, und der erste Anzeigeabschnitt (11) die Audioinformation mit zeitgleich angezeigter Information überlappt und das sich ergebende Bild anzeigt.

4. Fahrzeugmontierte Vorrichtung (100) gemäß Anspruch 2, wobei, erfasst der Erfassungsabschnitt (140), dass die tragbare Vorrichtung (10) abgelöst ist, der zweite Anzeigeabschnitt (131) die auf dem ersten Anzeigeabschnitt (11) anzuzeigende Information anzeigt.

## Revendications

1. Un dispositif monté sur un véhicule (100) capable de rattacher et détacher un dispositif portatif (10) comprenant une première partie d'affichage (11), le dispositif monté sur un véhicule (100) comprenant :
une deuxième partie d'affichage (131), et
une partie de détection (140) qui détecte que le dispositif portatif (10) est rattaché ou que le dispositif portatif (10) est détaché, et **caractérisé en ce qu'**il comprend en outre
une partie de commande (140) qui désactive la deuxième partie d'affichage (131) lorsque la partie de détection détecte que le dispositif portatif (10) est rattaché.

2. Le dispositif monté sur un véhicule (100) selon la revendication 1, **caractérisé en ce qu'**il comprend en outre :
une partie d'actionnement (132) qui entre une instruction d'actionnement,
où la partie de commande (140) évalue si l'instruction d'actionnement entrée par la partie d'actionnement (132) est une instruction relative à des informations à afficher sur la première partie d'affichage (11) au nom de la deuxième partie d'affichage (131), et transmet l'instruction relative aux informations à afficher sur la première partie d'affichage (11) au dispositif portatif (10), et
où le dispositif portatif (10) amène la première partie d'affichage (11) à afficher les informations en fonction de l'instruction.

3. Le dispositif monté sur un véhicule (100) selon la revendication 2, où les informations à afficher sur la première partie d'affichage (11) au nom de la deuxième partie d'affichage (131) sont des informations audio relatives à une fonction audio que possède le dispositif monté sur un véhicule (100), et la première partie d'affichage (11) recouvre les informations audio par les informations actuellement affichées et affiche l'image résultante.

4. Le dispositif monté sur un véhicule (100) selon la revendication 2, où lorsque la partie de détection (140) détecte que le dispositif portatif (10) est détaché, la deuxième partie d'affichage (131) affiche les informations à afficher sur la première partie d'affichage (11).
